# EUROPEAN PATENT APPLICATION

(11) **EP 4 383 415 A1**
(43) Date of publication of application: **12.06.2024**
(21) Application number: 23207566.3
(22) Date of filing: 02.11.2023
(51) Int. Cl.: H01M 50/204, H01M 50/207, H01M 50/30, H01M 50/367, H01M 50/383

(54) **BATTERY PACK**

(30) Priority: 07.12.2022 KR 20220169925
(71) Applicant: SK On Co., Ltd., Seoul 03161 (KR)
(72) Inventor: PARK, Ju Yong, 34124 Daejeon (KR); KANG, Min Song, 34124 Daejeon (KR); KIM, Ji Woong, 34124 Daejeon (KR); PAK, Byeong Jun, 34124 Daejeon (KR); SHIN, Suk Ho, 34124 Daejeon (KR); HAN, Jin Su, 34124 Daejeon (KR)
(74) Representative: Stolmár & Partner Patentanwälte PartG mbB

(57) **Abstract**

A battery pack is disclosed.

In some implementations, the battery pack includes a lower frame on which a battery module is disposed and a side frame assembly connected to the lower frame and facing at least one side of the battery module, wherein the side frame assembly includes a first frame forming an outer surface of the side frame assembly and a second frame partitioning a dust loading portion in which dust discharged from the battery module is loaded and a venting flow path portion along which gas discharged from the battery module flows, and facing the battery module.

## Description

### TECHNICAL FIELD

The technology and implementations disclosed in this patent document generally relate to a battery pack.

### BACKGROUND

Unlike primary batteries, secondary batteries are conveniently charged and discharged, and thus, have come to prominence as a power source for various types of mobile devices and electric vehicles. For example, a type of secondary battery using a non-aqueous electrolyte with high energy density has good power, so a plurality of such secondary batteries may be connected in series or in parallel to be used to drive a motor of an electric vehicle.

Battery modules applied to electric vehicles, etc. are modularized by electrically connecting a plurality of battery cells due to the need for high power and high capacity, and electric vehicles include a battery pack in which a plurality of such battery modules are arranged to obtain high power.

In a conventional battery pack, in a thermal runaway situation, high-temperature gas or flames occurring as any one battery module accommodated inside a battery pack ignites flow along a venting path provided inside the battery pack to be discharged to the outside of the battery pack.

Here, since the gas or flames occurring due to ignition of the battery module have a very high temperature, there may be a risk of damaging a housing structure of the battery pack.

In addition, as large and small dust particles emitted along with gas or flames enter the venting path along with gas, there is a risk that the dust may block the venting path or narrow a width thereof. If dust blocks the venting path like this, gas cannot be emitted smoothly to the outside of the battery pack, causing a temperature and pressure inside the battery pack to rise, which may cause secondary ignition and a chain thermal runaway phenomenon.

### SUMMARY

The disclosed technology may be implemented in some exemplary embodiments to provide a battery pack having a pack housing structure capable of preventing dust occurring during a thermal runaway situation from blocking a gas flow path.

The disclosed technology may be implemented in some exemplary embodiments to provide a battery pack capable of effectively emitting heat or flames occurring in a battery cell or battery module to the outside of the battery pack, thereby preventing chain ignition or explosion.

The disclosed technology may be implemented in some exemplary embodiments to provide a battery pack including a reinforcing member having strong resistance to heat or flames to prevent a structure of the battery pack from collapsing due to flames occurring in a battery cell or battery module.

In some exemplary embodiments of the disclosed technology, a battery pack includes: a lower frame on which a battery module is disposed; and a side frame assembly connected to the lower frame and facing at least one side of the battery module, wherein the side frame assembly includes a first frame forming an outer surface of the side frame assembly; and a second frame partitioning a dust loading portion in which dust discharged from the battery module is loaded and a venting flow path portion along which gas discharged from the battery module flows, and facing the battery module.

The battery module may include a venting hole through which gas is discharged, and the second frame may be disposed between the venting hole and the first frame.

The second frame may be coupled to the first frame, and the dust loading portion may be formed between the first frame and the second frame.

The second frame may be disposed so that at least one surface thereof faces the venting hole.

The venting path portion may be formed on at least one surface of the second frame in a longitudinal direction of the second frame.

The second frame may include: a partition partitioning the venting path portion and the dust loading portion; and a plurality of openings arranged in the partition and communicating with the venting path portion and the dust loading portion.

The plurality of openings may be arranged in a longitudinal direction of the second frame.

The venting path portion may face the venting hole in a first direction, and the dust loading portion may face the venting path portion in a second direction, perpendicular to the first direction.

The second frame may be coupled to the first frame in the first direction.

One side of the venting path portion may face the venting hole, and the dust loading portion may be disposed to face the other side opposite to the one side of the venting path portion.

The battery pack may further include: a fastening member coupling the first frame and the second frame to each other.

The fastening member may be provided in plural, and the plurality of fastening members may be arranged in a longitudinal direction of the second frame and are fastened to the first frame through the second frame.

The second frame may include a material having a melting point higher than that of a material forming the first frame.

The second frame may include at least one of iron, stainless steel, and mica.

### BRIEF DESCRIPTION OF DRAWINGS

Certain aspects, features, and advantages of the disclosed technology are illustrated by the following detailed description with reference to the accompanying drawings.
FIG. 1 is an exploded perspective view of a battery pack according to exemplary embodiments.
FIG. 2 is a perspective view of a side frame assembly included in a battery pack.
FIG. 3 is an exploded perspective view of the side frame assembly.
FIG. 4 is a cross-sectional view taken along line I-I' of FIG. 1.
FIG. 5 illustrates a venting path portion and a dust loading portion formed in a side frame assembly.
FIG. 6 is a partial cross-sectional view of a battery pack according to another exemplary embodiment.
FIG. 7 is an exploded perspective view of a side frame assembly according to another exemplary embodiment.

### DETAILED DESCRIPTION

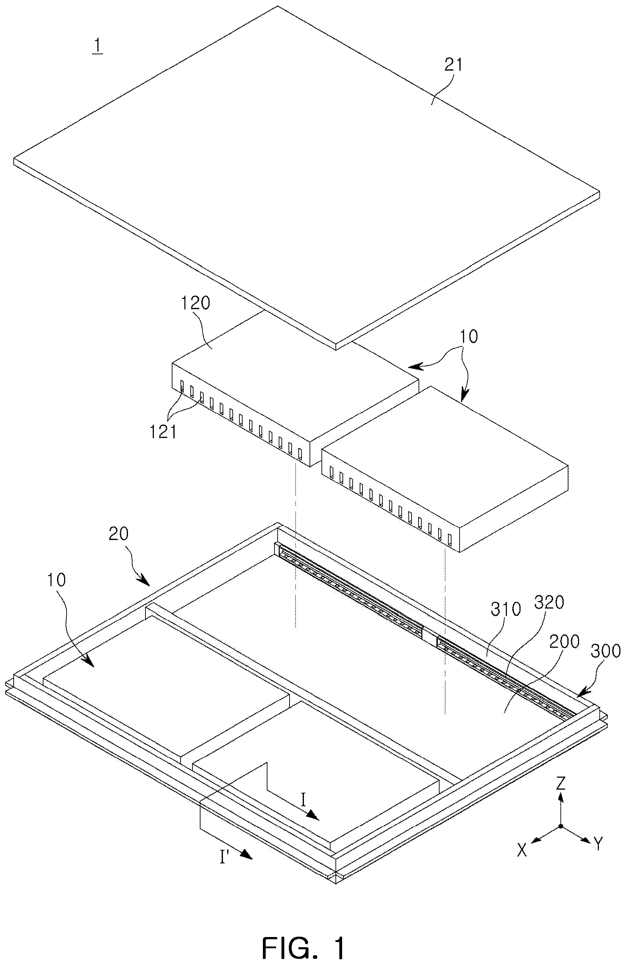

FIG. 1 is an exploded perspective view of a battery pack 1 according to exemplary embodiments.

The battery pack 1 may include a pack housing 20 and one or more battery modules 10 accommodated in an internal space of the pack housing 20.

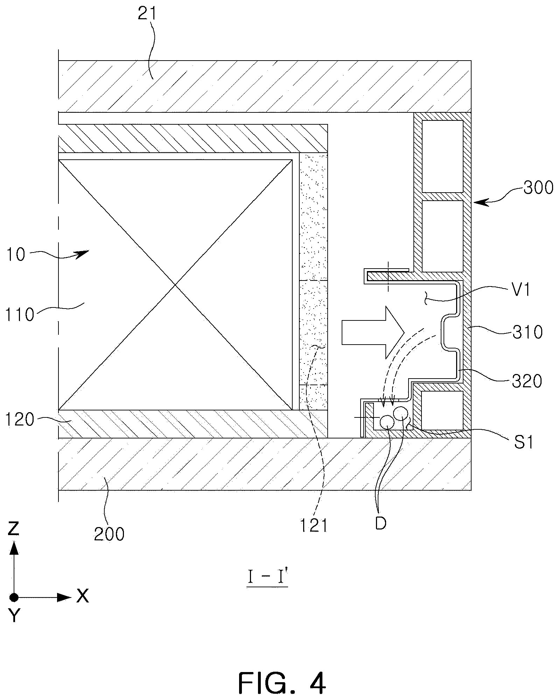

The battery module 10 may include one or more battery cells (for example, 110 in FIG. 4) that may be charged or discharged to store or emit electrical energy. For example, the battery module 10 may include a plurality of battery cells 110 formed of secondary batteries, such as lithium ion batteries or nickel-hydrogen batteries.

In exemplary embodiments, the battery module 10 may include a plurality of battery cells 110, a bus bar assembly (not shown) electrically connected to the battery cells 110, and an external case. As illustrated in FIG. 1, the battery module 10 may have a hexahedral shape. However, the external shape of the battery module 10 is not limited thereto and may be provided in various shapes.

The battery cell 110 included in the battery module 10 may include an electrode assembly (not shown) and an outer casing (not shown) accommodating the electrode assembly. For example, the battery cell 110 may be a pouch-type battery cell in which an electrode assembly (not shown) is accommodated inside an aluminum-coated pouch (not shown). Alternatively, the battery cell 110 may be a prismatic battery cell in which an electrode assembly (not shown) is accommodated inside a metal may (not shown). However, the specific shape of the battery cell 110 is not limited to the above, and the battery cell 110 may be provided to have any shape as long as the battery cell 110 may be accommodated inside the battery module 10.

The battery module 10 may include a module housing 120 having an internal space in which the battery cell 110 is accommodated. The module housing 120 may include a rigid material and may protect the battery cell 110 from an external environment of the battery module 10.

A venting hole 121, which is a hole through which gas may be emitted, may be provided on one side of the module housing 120. Gas or flames inside the module housing 120 may be emitted to the outside of the battery module through the venting hole 121.

However, the battery module 10 may also be formed of an assembly of battery cells without a separate module housing. For example, the battery module may be a battery cell assembly in which battery cells are stacked and fixed.

Meanwhile, in addition to one or more battery modules 10, various components may be accommodated in the internal space of the battery pack 1. For example, a connection member (not shown) connecting the plurality of battery modules 10 to each other may be accommodated in the internal space of the battery pack 1, or a sensing member (not shown) detecting a temperature of the battery pack 1 or input/output voltage of the battery pack 1 may be accommodated in the internal space of the battery pack 1.

The pack housing 20 of the battery pack 1 according to exemplary embodiments may include a lower frame 200 on which the battery module 10 is disposed and a plurality of side frame assemblies 300 coupled to the lower frame 200 to provide rigidity of the pack housing 20 in a height direction. In addition, the pack housing 20 may further include an upper frame coupled to the side frame assembly 300 to cover the internal space of the pack housing 20.

The lower frame 200 forms a lower surface of the pack housing 20. The lower frame 200 may be formed as a plate-shaped member provided with a seating surface on which the plurality of battery modules 10 are disposed. For example, the lower frame 200 may be provided as a quadrangular plate-shaped member or a polygonal plate-shaped member. However, the specific shape of the lower frame 200 is not limited to the above.

The lower frame 200 may be formed of a metal material having a certain level of rigidity. For example, at least a portion of the lower frame 200 may include aluminum. When the lower frame 200 includes aluminum, thermal energy generated in the battery module 10 may be expected to be quickly dissipated to the outside of the battery pack 1 due to the excellent thermal conductivity of aluminum. In exemplary embodiments, to increase the heat dissipation effect, the lower frame 200 may further include a heat dissipation member (not shown) or a cooling member (not shown). For example, a heat dissipation member (not shown) may be disposed on an upper surface of the lower frame 200 on which the battery module 10 is disposed to quickly transfer thermal energy generated by the battery module 10 toward the lower frame 200.

One or more side frame assemblies 300 may be coupled to the lower frame 200. The side frame assembly 300 may partition the internal space of the pack housing 20 to form accommodation spaces in which the plurality of battery modules 10 are accommodated. The side frame assembly 300 may be formed of a metal material having a certain level of rigidity or higher. For example, a portion of the side frame assembly 300 may be formed of aluminum for high heat dissipation effect.

In exemplary embodiments, one side frame assembly 300 may be provided to extend along one edge of the lower frame 200. Accordingly, the side frame assembly 300 may be a side partition member forming a side surface of the pack housing 20.

As the battery cell 110 included in the battery module 10 is charged and discharged under harsh conditions, flames or high-temperature gas may occur in the battery cell 110. In order to smoothly emit such flames or gas to the outside of the battery module 10, the battery module 10 according to exemplary embodiments may include one or more venting holes. Through the venting hole, thermal energy or gas occurring in the battery cell 110 may be emitted to the outside of the battery module 10 in a certain direction.

The side frame assembly 300 may be disposed to face the venting hole 121 of the battery module 10, and accordingly, a venting path through which gas or flames flow in a longitudinal direction (e.g., a Y-axis direction) of the side frame assembly 300 may be formed. Here, the longitudinal direction (the Y-axis direction) of the side frame assembly 300 may be perpendicular to the direction (an X-axis direction) in which the side frame assembly 300 and the battery module 10 face each other.

Flames or high-temperature gas emitted from the battery module 10 may reach the side frame assembly 300 around the battery module 10, and accordingly, high thermal energy may be applied to the side frame assembly 300. In addition, small dust discharged from the battery module 10 together with high-temperature gas may accumulate in the side frame assembly 300 and narrow the venting path.

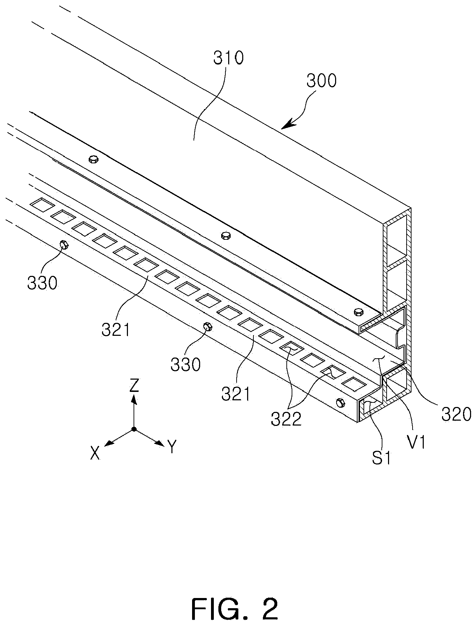

The side frame assembly 300 according to exemplary embodiments is provided with a reinforcing structure (e.g., a second frame 320 of FIGS. 2 to 5) to prevent flames or high-temperature gas occurring in the battery module 10 from damaging the side frame assembly 300. In addition, the side frame assembly 300 may include a space in which dust discharged together with gas from the battery module 10 may be loaded, thereby preventing dust from blocking the venting path.

Hereinafter, the side frame assembly 300 according to exemplary embodiments will be described in detail with reference to FIGS. 2 to 5.

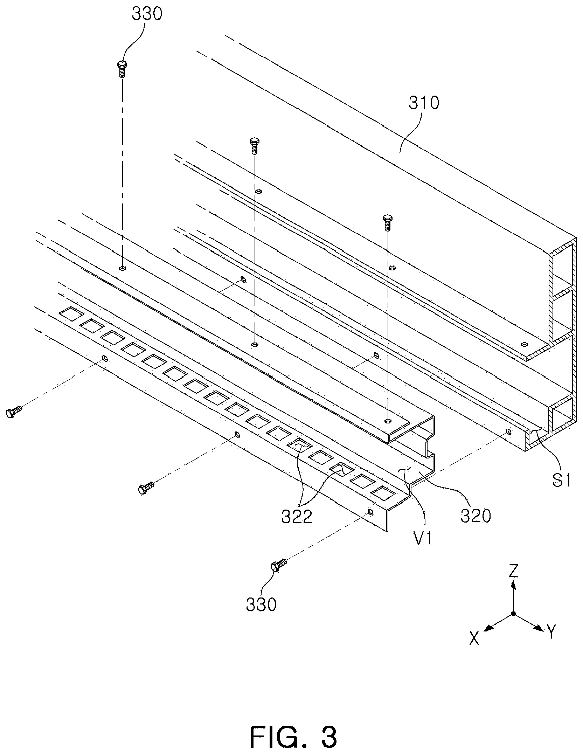

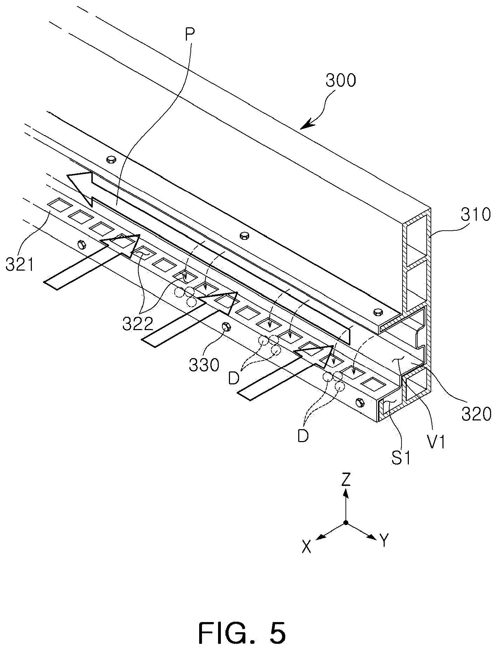

FIG. 2 is a perspective view of the side frame assembly 300 included in the battery pack. FIG. 3 is an exploded perspective view of the side frame assembly 300. FIG. 4 is a cross-sectional view taken along line I-I' of FIG. 1. FIG. 5 illustrates a venting path and a dust loading portion formed in the side frame assembly 300.

The side frame assembly 300 described with reference to FIGS. 2 to 5 and the battery pack 1 including the same correspond to the side frame assembly 300 described above with reference to FIG. 1 and the battery pack 1 including the same, and thus, redundant descriptions may be omitted.

The side frame assembly 300 according to exemplary embodiments may include a first frame 310 and the second frame 320. The first frame 310 and the second frame 320 may be coupled to each other to form a venting path portion V1 and a dust loading portion S1.

The first frame 310 may be coupled to the lower frame 200 and may form an outer wall of the pack housing 20. The first frame 310 may be formed of a rigid material to support a load applied in a height direction (e.g., a Z-axis direction) of the battery pack 1 and various other directions.

The first frame 310 may have a shape of a beam extending in one direction (e.g., the Y-axis direction). For example, the first frame 310 may be provided to extend along a partial edge of the lower frame 200.

The first frame 310 may be coupled to the lower frame 200 in various manners. For example, the first frame 310 may be welded and coupled to the lower frame 200. In this case, in order to secure sufficient welding force, the first frame 310 may be formed of the same material as that of the lower frame 200. However, the material of the first frame 310 is not limited thereto, and the first frame 310 may be formed of a material, different from that of the lower frame 200.

The side frame assembly 300 may further include the second frame 320 coupled to the first frame 310.

The second frame 320 may be configured to protect the first frame 310 from flames or high temperature gas emitted from the battery module 10. For example, the second frame 320 may be disposed on the side of the first frame 310 facing the battery module 10, and accordingly, high-temperature gas or flames, emitted from the battery module 10, reaching the first frame 310 may be minimized.

The second frame 320 may be formed by bending a plate-shaped member several times. The second frame 320 may cover at least a portion of an inner surface (that is, the surface facing the battery module 10) of the first frame 310. The second frame 320 may have a shape corresponding to a shape of the inner surface of the first frame 310.

The second frame 320 may be disposed between the battery module 10 and the first frame 310. For example, the battery module 10 and the first frame 310 may be arranged to face each other in the first direction (the X-axis direction), and the second frame 320 is disposed therebetween to prevent or minimize gas or flames emitted from the battery module 10 from reaching the first frame 310.

The second frame 320 may be coupled to the first frame 310 in the first direction (the X-axis direction). In this coupling direction, even if an impact is applied to the frame 320 due to gas or flames emitted from the battery module 10, the second frame 320 may not be easily detached from the first frame 310.

The second frame 320 may be disposed so that at least one surface thereof faces the venting hole 121 of the battery module 10. High-temperature gas or flames emitted into the pack housing 20 through the venting hole 121 may first reach the second frame 320.

The second frame 320 may be formed of a material that may withstand high temperature thermal energy. For example, the second frame 320 may be formed of a high heat-resistant and high fire-resistant material that melts at a temperature of 700°C or higher. Examples of high heat-resistant materials included in the second frame 320 may include inorganic materials, such as steel, stainless steel, and mica, but without being limited thereto, any material that does not melt at a temperature below 700°Cmay be used.

The second frame 320 may be formed of a material having a melting point higher than that of the first frame 310. For example, when the first frame 310 is formed of aluminum, the second frame 320 may be formed of a material having a melting point higher than a melting point (about 660 degrees Celsius) of aluminum.

The venting path portion V1 may be formed in a region of the second frame 320 facing the venting hole 121. The venting path portion V1 may be a space provided for gas or flames to flow in a predetermined direction.

The venting path portion V1 may be disposed to face the venting hole 121 of the battery module 10 in the first direction (the X-axis direction). The venting path portion V1 may extend in the longitudinal direction (the Y-axis direction) on one surface of the second frame 320. Gas or flames emitted from the battery module 10 may move to the front or rear of the pack housing 20 along the venting path portion V1 and then be emitted to the outside of the battery pack 1.

Gas emitted from the battery module 10 may include large and small dust particles D. In order to prevent the dust D from blocking the venting path portion V1, a dust loading portion S1, which is a space in which the dust D may accumulate, may be formed on one side of the venting path portion V1.

The dust loading portion S1 may be provided as a separate space that is distinct from the venting path portion V1. For example, as illustrated in FIG. 2 or FIG. 4, the dust loading portion S1 may be provided below the venting path portion V1 and may extend in a direction, parallel to the extension direction of the venting path portion V1.

The second frame 320 may partition the dust loading portion S1 and the venting path portion V1. The second frame 320 may further include a partition 321 partitioning the dust loading portion S1 and the venting path portion V1. For example, as illustrated in FIG. 2, the partition 321 may constitute at least a portion of the second frame 320 and may be configured to extend between the venting path portion V1 and the dust loading portion S1. The venting path portion V1 may be formed above the partition 321, and the dust loading portion S1 may be formed below the partition 321. The partition 321 may be provided with a plurality of openings 322 communicating with the venting path portion V1 and the dust loading portion S1. The plurality of openings 322 may be arranged in the longitudinal direction of the second frame 320 on the partition 321. The venting path portion V1 and the dust loading portion S1 may communicate with each other through the opening portion 322. Accordingly, at least some of the dust particles D discharged from the battery module 10 to the venting path portion V1 may flow into the dust loading portion S1 through the opening 322.

A configuration in which dust D discharged with gas is loaded into the dust loading portion S1 is described with reference to FIGS. 4 and 5.

As a thermal runaway situation occurs, high-temperature gas or flames may occur in the battery cell 110. The battery module 10 may discharge high-temperature gas or flames occurring in the battery cell 110 through the venting hole 121. At this time, gas or flames may be emitted from the battery module 10 in a direction facing the side frame assembly 300.

The gas and dust D discharged from the battery module 10 flow into the venting path portion V1 disposed to face the venting hole 121 and hit a wall (e.g., one surface of the second frame 320) facing the venting hole 121 in the side frame assembly 300. Due to the collision, kinetic energy of the dust D is reduced, and the dust particles D having weight fall into the dust loading portion S1 provided at a lower end of the venting path portion V1 by gravity.

For example, when it is assumed that the venting path portion V1 formed on one surface of the second frame 320 faces the venting hole 121 in the first direction (the X-axis direction), the dust loading portion S1 may be disposed to face the venting path portion V1 in the second direction (the Z-axis direction), perpendicular to the first direction (the X-axis direction). In this case, the dust loading portion S1 may be located to be lower than the venting path portion V1 in the direction of gravity.

The dust loading portion S1 and the venting path portion V1 may communicate with each other through the opening 322 of the second frame 320. The dust D that falls down may enter the dust loading portion S1 through the opening 322.

The dust D falling into the dust loading portion S1 may be blocked by the partition 321 of the second frame 320 and may not rise again to the venting path portion V1.

Accordingly, based on the partition 321 of the second frame 320, gas and small and light dust particles may flow in a predetermined direction (e.g., the Y-axis direction) in an upper portion of the partition 321 (i.e., the venting path portion V1), and heavy dust particles D are loaded in a lower portion of the partition 321 (i.e., the dust loading portion S1).

In this manner, among the dust particles discharged to the outside of the battery module 10 together with gas, heavy and large dust particles may be loaded in the dust loading portion S1, and only dust particles having relatively small or light particle size may remain inside the venting path portion V1. As large and heavy dust particles D are removed, a gas flow in the venting path portion V1 becomes smooth, allowing high-temperature gas to be quickly and smoothly discharged to the outside of the battery pack 1. In addition, it is possible to prevent dust D from blocking the venting path portion V1, increasing the temperature and pressure inside the pack housing 20, and causing chain ignition.

In particular, according to the structure of the battery pack 1 of the exemplary embodiments, large and heavy dust particles D naturally fall down, while gas and dust hit the wall surface of the side frame assembly 300 to lose energy, so that dust D in the gas may be easily filtered without a separate filtering device.

Meanwhile, the side frame assembly 300 may further include a fastening member 330 coupling the first frame 310 to the second frame 320. For example, the fastening member 330 may be provided as a screw, bolt, or nut, and may penetrate through the second frame 320 to be fastened to the first frame 310.

A plurality of fastening members 330 may be provided. For example, as illustrated in FIG. 3, a plurality of fastening members 330 may be provided in the longitudinal direction (the Y-axis direction) of the side frame assembly 300.

The first frame 310 and the second frame 320 may be mechanically firmly fastened through the fastening member 330, and the coupled state may be stably maintained even when high-temperature thermal energy or explosive energy is applied.

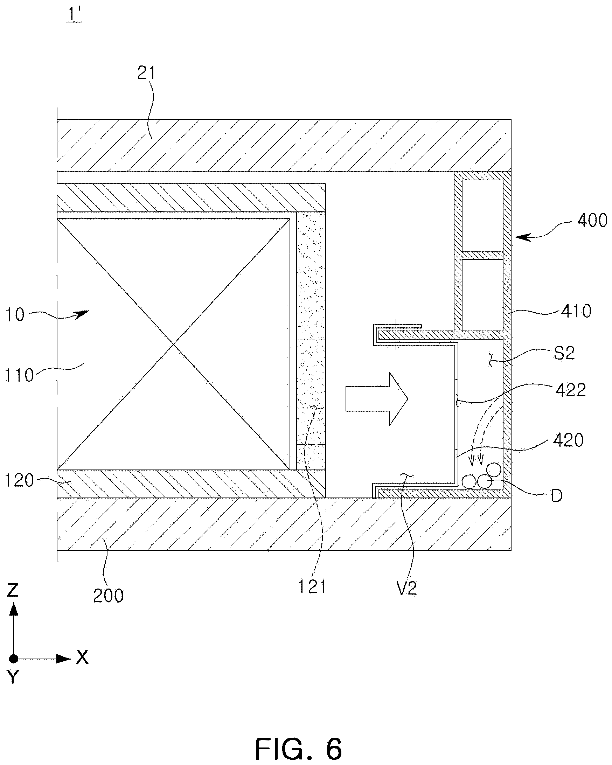

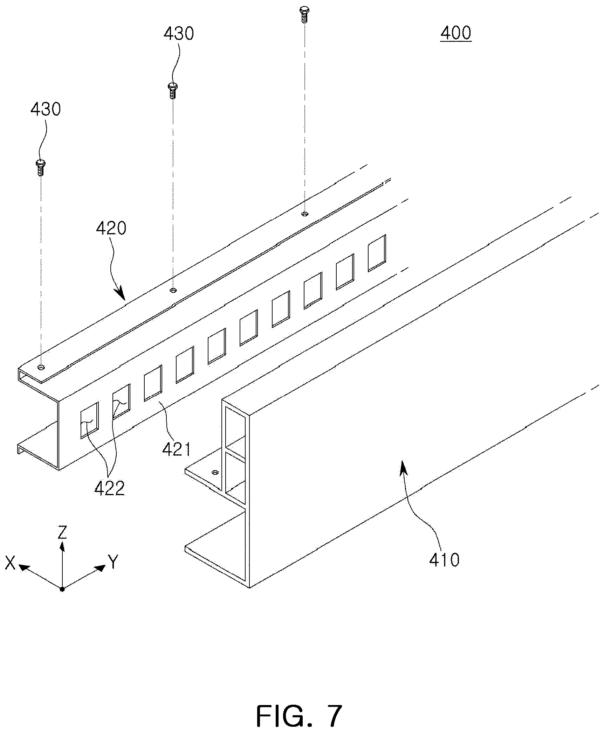

FIGS. 2 to 5 illustrate the venting path portion V1 and the dust loading portion S1 arranged in a vertical direction, but the arrangement structure of the venting path portion V1 and the dust loading portion S1 is limited thereto. For example, as illustrated in FIGS. 6 and 7, the venting path portion V1 and the dust loading portion S1 may be arranged to face each other in a direction, horizontal to the lower frame 200.

Hereinafter, a battery pack having a side frame assembly 400 according to another exemplary embodiment will be described with reference to FIGS. 6 and 7.

FIG. 6 is a partial cross-sectional view of a battery pack 1' according to another exemplary embodiment. FIG. 7 is an exploded perspective view of the side frame assembly 400 according to another exemplary embodiment.

In the battery pack 1' illustrated in FIGS. 6 and 7, all components (e.g., the battery module 10, the lower frame 200, the upper frame, etc.), except the side frame assembly 400, have the same characteristics as those of the battery pack 1 described above with reference to FIGS. 1 to 5, and thus, redundant descriptions may be omitted.

In exemplary embodiments, the side frame assembly 400 may include a first frame 410 and a second frame 420 coupled to each other. The first frame 410 may be coupled with the lower frame 200 to form an outer surface of the battery pack 1' and may provide rigidity in the height direction (the Z-axis direction) of the battery pack 1'. In this case, a material constituting the first frame 410 or a method of coupling the lower frame 200 and the first frame 410 may refer to the description of the first frame 310 of FIGS. 1 to 5.

The second frame 420 may be formed by bending a plate-shaped member multiple times and may be coupled to the first frame 410 in a first direction.

The second frame 420 may partition the venting path portion V2 and the dust loading portion S2. For example, a venting path portion V2 may be formed on one side of the second frame 420 opposite to the venting hole of the battery module 10, and a dust loading portion S2 may be formed on the other side opposite to one side. In this case, the dust loading portion S2 may be formed in a space between the first frame 410 and the second frame 420.

As described above with reference to FIGS. 1 to 5, the second frame 420 may be formed of a material that may withstand high-temperature thermal energy to protect the first frame from high-temperature gas or flames discharged from the battery module 10.

For example, the second frame 420 may be formed of a high heat-resistant and high fire-resistant material that melts at a temperature of 700°Cor higher. Examples of high heat-resistant materials included in the second frame 420 may include inorganic materials, such as steel, stainless steel, and mica, but without being limited thereto, any material that does not melt at a temperature below 700°Cmay be used.

The second frame 420 may be formed of a material having a melting point higher than that of the first frame 410. For example, when the first frame 410 is formed of aluminum, the second frame 420 may be formed of a material having a melting point higher than a melting point (about 660 degrees Celsius) of aluminum.

The venting path portion V2 may be formed in a region of the second frame 420 facing the venting hole 121. The venting path portion V2 may be a space provided for gas or flames to flow in a predetermined direction (e.g., the Y-axis direction).

The venting path portion V2 may be disposed to face the venting hole 121 of the battery module 10 in the first direction (the X-axis direction). The venting path portion V2 may extend in the longitudinal direction (the Y-axis direction) on one surface of the second frame 420. Gas or flames emitted from the battery module 10 may move to the front or rear of the pack housing 20 along the venting path portion V2 and then be emitted to the outside of the battery pack 1'.

The venting path portion V2 and the dust loading portion S2 of the side frame assembly 400 may be arranged to face each other in the horizontal direction. Here, the horizontal direction may be parallel to the upper surface of the lower frame 200. Alternatively, the horizontal direction may be a direction, perpendicular to the direction of gravity.

The battery module 10, the venting path portion V2, and the dust loading portion S2 may be arranged in the first direction (the X-axis direction). For example, one side of the venting path portion V2 faces the venting hole 121 of the battery module 10 in the first direction (the X-axis direction), and the other side opposite to the one side may be disposed to face the dust loading portion S2 in the first direction (the X-axis direction).

The second frame 420 may further include a partition 421 partitioning the dust loading portion S2 and the venting path portion V2. For example, as illustrated in FIG. 7, the partition 421 may constitute at least a portion of the second frame 420 and may be configured to extend across between the venting path portion V2 and the dust loading portion S2. The partition 421 of the second frame 420 may be disposed to face the venting hole 121 of the battery module 10 in the first direction (the X-axis direction). The venting path portion V2 may be formed on one side of the partition 421, and the dust loading portion S2 may be formed between the other surface of the partition 421 and the first frame 410. A plurality of openings 422 may be provided in the partition 421, so that the venting path portion V2 and the dust loading portion S2 may communicate with each other.

The side frame assembly 400 may further include a fastening member 430 that couples the first frame 410 and the second frame 420. For example, the fastening member 430 may be provided as a screw, bolt, or nut, and may penetrate through the second frame 420 to be fastened to the first frame 410.

A plurality of fastening members 430 may be provided. For example, as illustrated in FIG. 7, a plurality of fastening members 430 may be provided in the longitudinal direction (the Y-axis direction) of the side frame assembly 400.

The first frame 410 and the second frame 420 may be mechanically firmly fastened through the fastening member 430, and the coupled state may be stably maintained even when high-temperature thermal energy or explosive energy is applied.

In a thermal runaway situation, gas and large or small dust particles occurring in the battery cell 110 may be discharged to the outside of the battery module 10 through the venting hole 121 of the battery module 10. For example, gas and flames may be discharged in the first direction (the X-axis direction) through the venting hole 121 to reach the side frame assembly 400 facing the battery module 10 in the first direction (the X-axis direction).

Gas and dust particles discharged from the battery module 10 may pass through the opening 422 of the second frame 420 and hit the side surface of the first frame 410. Due to this collision, kinetic energy of the dust is reduced and dust particles D having weight fall to and collect in the lower portion of the dust loading portion S2 by gravity.

Accordingly, small dust particles and gas that are relatively light in weight may move toward the front or rear of the pack housing 20 along the venting path portion V2 on the second frame 420, and large and heavy dust particles D may be trapped in the dust loading portion S2 and may not block the venting path portion V2.

In this manner, among dust particles discharged to the outside of the battery module 10 together with the gas, heavy and large dust particles may be loaded in the dust loading portion S2, and only dust particles having relatively small or light particle size may remain inside the venting path portion V2. Since large and heavy dust particles D are removed, gas flow in the venting path portion V2 becomes smooth, allowing high-temperature gas to be quickly and smoothly discharged to the outside of the battery pack 1'. In addition, it is possible to prevent dust D from blocking the venting path V2, increasing the temperature and pressure inside the pack housing 20, and causing chain ignition.

The battery pack according to exemplary embodiments may have a pack housing structure that prevents dust occurring in a thermal runaway situation from blocking the gas flow path.

In addition, the battery pack according to exemplary embodiments may effectively discharge heat or flames occurring in the battery cell or battery module to the outside of the battery pack to prevent chain ignition or explosion.

## Claims

1. A battery pack comprising:
a lower frame on which a battery module is disposed; and
a side frame assembly connected to the lower frame and facing at least one side of the battery module,
wherein the side frame assembly includes:
a first frame forming an outer surface of the side frame assembly; and
a second frame partitioning a dust loading portion in which dust discharged from the battery module is loaded and a venting flow path portion along which gas discharged from the battery module flows, and facing the battery module.

2. The battery pack of claim 1, wherein
the battery module includes a venting hole through which gas is discharged, and
the second frame is disposed between the venting hole and the first frame.

3. The battery pack of claim 2, wherein
the second frame is coupled to the first frame, and
the dust loading portion is formed between the first frame and the second frame.

4. The battery pack of claim 2, wherein the second frame is disposed so that at least one surface thereof faces the venting hole.

5. The battery pack of claim 4, wherein the venting path portion is formed on at least one surface of the second frame in a longitudinal direction of the second frame.

6. The battery pack of claim 2, wherein
the second frame includes:
a partition partitioning the venting path portion and the dust loading portion; and
a plurality of openings arranged in the partition and communicating with the venting path portion and the dust loading portion.

7. The battery pack of claim 6, wherein the plurality of openings are arranged in a longitudinal direction of the second frame.

8. The battery pack of claim 6, wherein
the venting path portion faces the venting hole in a first direction, and
the dust loading portion faces the venting path portion in a second direction, perpendicular to the first direction.

9. The battery pack of claim 8, wherein the second frame is coupled to the first frame in the first direction.

10. The battery pack of claim 6, wherein
one side of the venting path portion faces the venting hole, and
the dust loading portion is disposed to face the other side opposite to the one side of the venting path portion.

11. The battery pack of claim 3, further comprising a fastening member coupling the first frame and the second frame to each other.

12. The battery pack of claim 11, wherein the fastening member is provided in plural, and the plurality of fastening members are arranged in a longitudinal direction of the second frame and are fastened to the first frame through the second frame.

13. The battery pack of claim 1, wherein the second frame includes a material having a melting point higher than that of a material forming the first frame.

14. The battery pack of claim 13, wherein the second frame includes at least one of iron, stainless steel, and mica.
